# EUROPÄISCHE PATENTANMELDUNG

(11) **EP 2 175 334 A2**
(43) Veröffentlichungstag der Anmeldung: **14.04.2010**
(21) Anmeldenummer: 09012604.6
(22) Anmeldetag: 06.10.2009
(51) Int. Cl.: G05B 19/408

(54) **Verfahren zur Steigerung der Effizienz von Fahrzeugen bzw. Fahrzeugsystemen mit und ohne Waffensysteme**

(30) Priorität: 13.10.2008 DE 102008051017
(71) Anmelder: Rheinmetall Landsysteme GmbH, 24107 Kiel (DE)
(72) Erfinder: Lach, Björn, 24211 Preetz (DE); Besuch, Jürgen, 24159 Kiel (DE); Fischer, Timo, 24159 Kiel (DE); Richter, Ralph, 24211 Preetz (DE); Vom Stein, Stefan, 24222 Schwentinental (DE); Kauffels, Peter, 24114 Kiel (DE); Hahn, Torsten, 24113 Molfsee (DE); Zielonka, Christoph, 24114 Kiel (DE); Mahnke, Wolfgang, 24229 Dänischenhagen (DE); Grimm, Werner, 34127 Kassel (DE); Blumenstein, Klaus, 37235 Hessich Lichtenau (DE); Fröhlich, Norbert, 24145 Kiel (DE)
(74) Vertreter: Dietrich, Barbara

(57) **Zusammenfassung**

Vorgeschlagen wird ein Verfahren zur Steigerung der Effizienz von Fahrzeugen bzw. Fahrzeugsystemen mit und ohne Waffensysteme bei Betrieb, Instandhaltung und Wartung. Dazu wird eine Fahrzeugakte im Rechner angelegt, die wenigstens eine Vers-Nr. und Bezeichnung, eine Teilekennzeichnung, eine Seriennummer, einen Hersteller, eine Softwareversion, eine Erstinbetriebnahme, vom Hersteller angegebenen Betriebsstunden / Laufleistung, ein Einbaudatum, durchgeführte Änderungsanträge, ein Ausfalldatum mit erreichter Betriebsleistung sowie eine Fehlerbeschreibung eines Bauteils oder einer Komponente enthält. Diese Daten beziehen sich auf das Gesamtfahrzeug, wie wenigstens ein Fahrzeugkennzeichen (Y-Nummer), eine Dienststellen-Nr. (Einheit), ein Referenzkonfigurationsstand, Laufleistung, Betriebsstunden, Verbrauch, durchgeführte Untersuchungen etc. Die Daten werden dann für eine ganzheitliche Betrachtung von fahrzeug- und waffensystemrelevanten logistischen Daten im Verbund mit den logistischen Prozessen, Organisations-, Informations- und Kommunikationsstrukturen des militärischen und polizeilichen Bedarfsträger /-deckers herangezogen.

## Beschreibung

Die Erfindung betrifft ein, die Effizienzsteigerung von gepanzerten und ungepanzerten Landsystemen, wie Fahrzeugsysteme mit oder ohne Waffensysteme, steigerndes Verfahren.

On-Board Diagnosen als auch Off-Board Diagnosen, insbesondere in der zivilen Fahrzeugindustrie gibt es derer viele. Während die Off-Board Diagnose in der Regel auf einem externen Rechner (Werkstatt) abläuft, wird bei der On-Board Diagnose ein fahrzeugeigenes System verwendet. So beschreibt die DE 10 2005 062 122 A1 ein Verfahren und ein Steuergerät zur Diagnose eines Katalysatorsystems. Die DE 10 2006 016 339 A1 beschäftigt sich mit einem Verfahren zur Diagnose einer Tanklüftungsanlage sowie mit einer Vorrichtung zur Durchführung des Verfahrens. Die DE 10 2006 061 523 B4 wiederum offenbart ein Diagnoseverfahren sowie ein Diagnosesystem und zugehörigen Messwertaufnehmer, um das Entstehen von Fehlern zu erkennen und auf mögliche Ursachen für Fehlfunktionen des der Diagnose unterzogenen Systems zu schlussfolgern. Ein weiteres Diagnosegerät ist der DE 20 2006 019 993 U1 entnehmbar.

Ein nicht uninteressanter Ansatz für eine Diagnose in automotiven Anwendungen bringt die DE 10 2006 017 824 A1. Hier wird vorgeschlagen, die modellbasierte und die assoziative Diagnose miteinander zu kombinieren. Grundlegende Idee dabei ist, ein Modell des entsprechenden Systems in verschiedenen Fehlermodi und in seinem typischen Eingabenbereich zu simulieren und eine Simulationsdatenbank anzulegen. Aus dieser wird ein vereinfachtes, regelbasiertes Verhaltensmodell erstellt etc. und für eine heuristische Klassifikation der in Frage kommenden Fehler optimiert, wobei berücksichtigt wird, dass beispielsweise die Fahrzeugelektronik nur die Auswirkung des Fehlers erkennt, jedoch nicht den Fehler selbst.

Mit der DE 10 2005 015 664 A1 wird ein Diagnosesystem zur Bestimmung einer gewichteten Liste möglicherweise fehlerhafter Komponenten aus Fahrzeugdaten und Kundenangaben publiziert. Ein Servicemechaniker kann durch Setzen eines Fokus innerhalb des automatisch ermittelten Suchraums die Fehlersuche auf ausgewählte Fehlercodes oder Funktionen einschränken.

Aus der DE 10 2007 010 978 A1 ist ein weitere Lösungsansatz bekannt, bei welchem lediglich das bei der Produktion des elektrischen Systems anfallenden Wissens über die einzelnen Varianten verwendet wird, um hieraus ein wahrscheinlichkeitsbasiertes Netzwerk zu erzeugen, mit dessen Hilfe dessen beobachtete Fehlerereignisse auswertbar sind, um eine gewünschte Liste an möglichen fehlerhaften Komponenten gewichtet nach Vertrauenswerten für eine Fehlerhaftigkeit der einzelnen Komponenten zu erhalten.

Ein Verfahren zur Simulation fiktiver Systemzustände eines zentralrechnergesteuerten Systems, insbesondere eines Fahrzeugsystems oder eines Waffensystems ist aus der DE 10 2005 018 213 A1 bekannt.

Die vorliegende Erfindung stellt sich, basierend auf derartige Ansätze, die Aufgabe, eine Möglichkeit zur Unterstützung des Konzepts aufzuzeigen, die eine Effizienzerhöhung beim Betrieb von Fahrzeug- und Waffensystemen insbesondere beim Anwender ermöglicht.

Gelöst wird die Aufgabe durch die Merkmale des Patentanspruchs 1. Vorteilhafte Ausgestaltungen sind in den Unteransprüchen vermerkt.

Die Grundidee der Erfindung liegt darin, bestimmte Fahrzeugdaten in eine sogenannte (digitale) Fahrzeugakte einzustellen, die eine ganzheitliche Betrachtung von fahrzeug- und waffensystemrelevanten logistischen Daten im Verbund mit den logistischen Prozessen, Organisations-, Informations- und Kommunikationsstrukturen des militärischen und polizeilichen Bedarfsträger /-deckers ermöglicht. Dabei werden Daten automatisch oder manuell erfasst und unter militärisch oder polizeilich logistischen Gesichtspunkten weiter generiert, ausgewertet, prognostiziert und für verschiedene Anwendungen entsprechend den Aufgaben der Fahrzeuge zur Verfügung gestellt.

Zur eindeutigen Identifizierung wäre das Abspeichern der Vers-Nr. und Bezeichnung, der Teilekennzeichnung, der Seriennummer, des Herstellers, der Softwareversion, der Erstbetriebnahme, der (vom Hersteller angegebenen Betriebsstunden / Laufleitung, das Einbaudatum, durchgeführte Änderungsanträge, das Ausfalldatum mit erreichter Betriebsleistung sowie die Fehlerbeschreibung anzustreben. Des Weitere werden Daten hinterlegt, die sich auf das Gesamtfahrzeug beziehen, wie Fahrzeugkennzeichen (Y-Nummer), Dienststellen-Nr. (Einheit), Referenzkonfigurationstand, Laufleistung, Betriebsstunden, Verbrauch, Durchgeführte Untersuchungen etc.

Diese digitale Fahrzeugakte ermöglicht somit das Anlegen und Pflegen des Bauzustandes eines militärischen Landsystems. In idealer Weise werden diese Daten zudem an eine zentrale Einheit gesendet, wodurch die Daten einzelner Fahrzeugfamilien (gleichartige Fahrzeuge mit gleichen militärischen Aufgaben) miteinander verglichen und für die Ausfallprognose der Bauteile andere Fahrzeugmitglieder herangezogen werden können. Aus den logistischen Daten in den militärischen und polizeilichen Informationssystemen können weiter ausgewertete logistische Daten in die militärischen und polizeilichen Einzelsystemen als Handlungsempfehlungen für die Besatzungen oder den Instandhaltungssetzer vor Ort geliefert werden.

Als Hardware wird bedarfsweise ein Rechner ins Fahrzeug integriert, mit dem das Erfassen, Generieren und die Auswertung / Prognose von allen im Bezug auf das Fahrzeug relevanten, aktuellen logistischen Daten ständig durchführbar ist. Dieser Rechner dient externen Komponenten als Instandhaltungsrechner oder einem zentralen ERP-System als einheitliche Gegenstelle im Fahrzeug. Damit die gleiche logistische Intelligenz in jedes Fahrzeug verbaut werden kann, wird eine Trennung in querschnittliche Funktionalitäten und Fahrzeugadaption vorgenommen, wobei der querschnittliche Rechner für eine einheitliche Kommunikation mit der Außenwelt sorgt. Die Anpassung an das jeweilige Fahrzeug (Anbindung an Bussysteme, Anbindung an Sensorik) wird durch eigenständige Schnittstellenzusatzmodule realisiert. Rechner und Schnittstellenzusatzmodule werden unabhängig vom Fahrzeug mittels eines einheitlichen Bussystems verbunden, was die logistische Einbindung von Altsystemen ermöglicht.

Damit wird Störmanagement weiter ausgebaut und neben der Erfassung fahrzeuginterner Stördaten auch die Erfassung fahrzeugexterner Stördaten realisiert, um diese der Störanalyse bereitzustellen. Dieses Stördatenmanagement baut dabei auf ein so genanntes Betriebsdatenmanagement auf, das eine Datensammlungsaufbereitung vorsieht mit zentraler und einer Fahrzeug übergreifenden Auswertung. Aus dem Stördatenmanagement wiederum lassen sich Informationen über die Verfügbarkeit, über Betriebsdaten und eine Nachweisführung aufbauen, die ihrerseits dann in die Logistik eingreifen. So kann die Instandhaltung von Fahrzeugen und Waffensystemen vorab geplant werden und eine so genannte Instandhaltungshistorie mit einer planbaren Instandhaltungswahrscheinlichkeit aufgebaut werden. Wichtig dabei ist, dass diese Informationen bzw. Daten genutzt werden können für eine effektive Materialbeschaffung/-verwaltung. Von besonderem Interesse für die Logistikplanung ist die Prognose zukünftiger Ausfallraten.

Vorliegende Lösung dient somit der Effizienzsteigerung von gepanzerten und ungepanzerten Landsystemen (Teil- oder Gesamtsystem) des Militärs, der Polizei etc. bei der Entwicklung, Planung, Organisation, Ausbildung, dem Betrieb, der Instandhaltung, Wartung und - von großer Wichtigkeit - der Einsatzunterstützung, da der Einsatz von Iogistischem Personal gezielt gesteuert werden kann, durch beispielsweise vorausschauende Ersatzteilanforderung. Ausfallzeiten können reduziert werden und einsatzwichtige Systeme und Komponenten vorbeugend gewartet werden.

Alle im Fahrzeug auftretenden Störfälle werden fahrzeugintern gesammelt und gespeichert und der externen Auswertung zur Verfügung gestellt. Des Weiteren können die in dem externen System für ein bestimmtes Fahrzeug / Fahrzeugtyp erzeugten bzw. eingegangenen Störmeldungen eingelesen und für die fahrzeuginterne Auswertung weiter genutzt werden. Aufgrund der zentral abgelegten Informationen über alle Systeme können die Störungen detailliert ausgewertet und eine Stördatenanalyse durchgeführt werden. Aufbauend auf diese Informationen ist des Weiteren die Möglichkeit gegeben, beispielsweise eine Schwachstellenanalyse durchzuführen.

Im Rahmen der Instandhaltung kann jederzeit auf die fahrzeuginternen gespeicherten Informationen zurückgegriffen und somit können detaillierte Erkenntnisse über den aktuellen ustand gewonnen werden. Über die im Fahrzeug hinterlegte Instandhaltungshistorie stehen weitere fahrzeugspezifische Informationen zur Verfügung, die durch Zugriff auf das zentrale Datenbanksystem auf die über die gesamte Fahrzeugflotte gewonnene Erkenntnisse erweitert werden können. Im Rahmen der Materialbewirtschaftung kann durch Verbesserung des Planungsprozesses für die Materialbevorratung durch Einleitung von Präventivmaßnahmen aufgrund von Verschleiß- und Ausfallprognosen sowie zur Optimierung der Instandhaltungsvorgänge unterstützt werden. Durch Aufbau eines Expertensystems, in dem alle aufgetretenen Problemfälle mit deren durchgeführten Instandhaltungsmaßnahmen hinterlegt sind und dem Zugriff auf Expertenwissen bis hin zum Hersteller ist es möglich, eine detaillierte Diagnose / Auswertung aller zu bearbeitenden Störfälle durchzuführen und das Instandhaltungspersonal effektiv zu nutzen und zu unterstützen.

Möglich wird nunmehr die zustandsorientierte Wartung einer Komponente, also nicht mehr nach vorgegebenen Regeln (Zeitintervallen etc.), sondern abhängig von den tatsächlich auf die Komponente über die Zeit wirkenden Betriebs- und Einsatzbedingungen. Bei genauer Kenntnis der Einflüsse auf eine Komponente und ihrer Auswirkung auf die Wartungsregeln können so ereignisabhängig die erforderlichen Wartungen vorgezogen werden, um eine weitere Einsatzbereitschaft nicht zu gefährden, oder hinausgeschoben werden, ohne Nachteile beim Betriebsverhalten befürchten zu müssen.

Zur Diagnose werden Klassenmodelle aufgebaut.

Zur systematischen Identifizierung / Kategorisierung von Systemkomponenten, darauf aufbauend zur Bewertung der logischen Auswertbarkeit sowie Richtlinien zur Implementierung gibt es ein Klassenmodel mit Regeln, um Baugruppen verlässlich in logischen Prozessen verwalten zu können. Die Baugruppen werden eindeutig einer bestimmten Klasse / Kategorie von Systemkomponenten zugeordnet. Danach wird für die jeweilige Klasse angegeben, mit welchen Daten / Mitteln sie in ihrem derzeitigen Zustand logistische Prozesse unterstützt. Bei Bedarf kann die Baugruppe von einer Klasse in eine andere Klasse gewandelt werden, um beispielsweise eine bessere Prozessunterstützung (mehr Daten / Mittel) zu bieten. Die nötigen Maßnahmen zur Wandlung sind der jeweiligen Klasse zugeordnet. Basierend auf den Klassen des Klassenmodels mit Regeln werden Klassenmodelle mit Daten die Ursprünge und Verwendbarkeiten von Daten betrachtet. Dabei sind die Daten einerseits nach System- bzw. Baugruppenbezug aufgelistet, andererseits nach Datenkategorien. Diese Struktur stellt die Abstrahierung sicher. Darüber hinaus erfolgt die Einbeziehung von nicht- elektrischen sowie nicht elektronischen Komponenten (Umgebungs- bzw. Umweltdiagnose-Einflüsse auf Karosserie, Waffenstation etc., Lagerdiagnose etc.) in die Prüftechnik / Diagnostik. Die hier anfallenden Daten werden in gleicher Weise wie die übrigen Daten behandelt.

In die Prognose gehen somit die in On-Board Diagnose und in Off-Board Diagnose generierten Informationen einzeln und / oder kombiniert ein.

Die Kommunikationsschnittstellen zwischen dem fahrzeugintegrierten Rechner und externen Rechner, wie z. B. dem Instandhaltungsrechner erlauben durch die direkte Anbindung an die Fahrzeugbusse und -aktoren einen steuernden Eingriff in Baugruppen des Fahrzeuges.

Die vorliegende Erfindung kann auch in zivilen Bereichen Einsatz finden, sie ist nicht auf die Nutzung in wehrtechnischen Dienststellen etc. beschränkt.

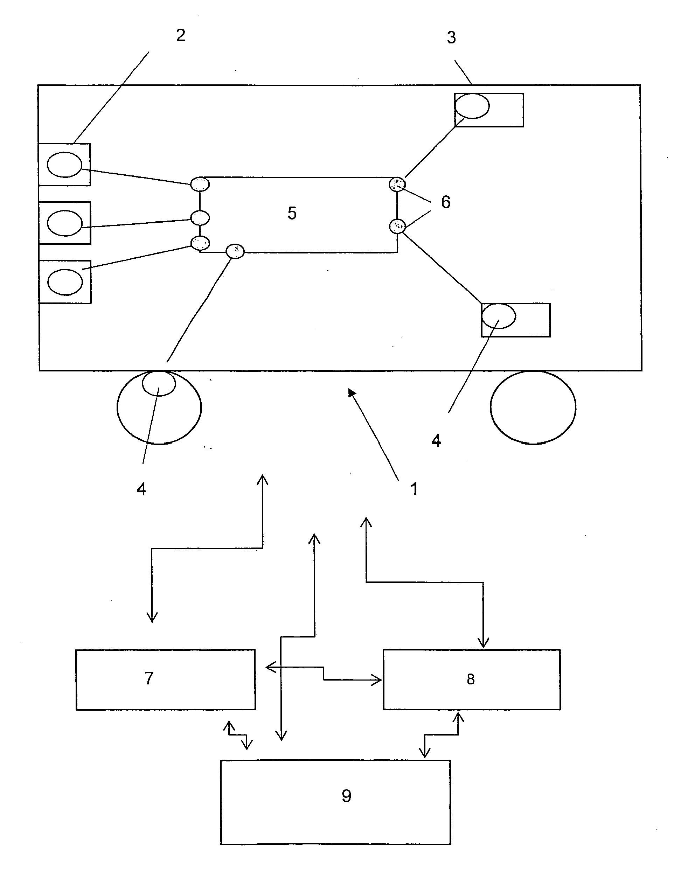

Anhand eines Ausführungsbeispiels mit Zeichnung soll die Erfindung näher erläutert werden. Es zeigt die einzige Figur eine einfache Blockbilddarstellung des Konzeptes, wobei mit 1 ein verallgemeinert dargestellte Fahrzeug mit bevorzugt einem Waffensystem auf dem Fahrzeug 1 angegeben ist. (Alternativ kann das Waffensystem auch auf einem stationären Objekt angebracht sein.) Das Fahrzeug 1 besteht aus mehreren Baugruppen 2 bzw. Komponenten 3 und mehreren Sensoren 4, die entsprechend ihrer Aufgabe am Fahrzeug 1 angebracht sind. Im Fahrzeug 1 befindet sich eine Rechner 5, der mit einer sogenannten internen Software betriebsfähig ist. Der Rechner 4 kommuniziert über eigenständige Schnittstellenzusatzmodule 6 mit den Sensoren 4 der entsprechenden Baugruppen 2 bzw. Komponenten 3. Des Weiteren kommuniziert der Rechner 5 mit einem oder mehreren externen Rechnern 7, 8, 9, wobei einer dieser Rechner 9 als Zentralrechner fungierten sollte. Zumindest der Zentralrechner 9 besitzt eine vollständige Datensammlung, die durch die Rechner 5, 7, 8 der Fahrzeuge 1 mit fahrzeugspezifischen Informationen angelegt werden. Die Datensammlung enthält zudem beispielsweise ausbildungsrelevante Daten, Materiallisten, Anlageblätter etc., die die Diagnose und Schulungsaufgabe unterstützen.

Im Rechner 5, 7, 8 werden sogenannte elektronische Typenschilder oder baugruppenintern für die Baugruppen 2 abgespeichert und in ein Bauzustandsmanagement für das gesamte Fahrzeug 1 mit Waffensystem in Form einer Fahrzeugakte übernommen.

Zur eindeutigen Identifizierung werden Vers-Nr. und Bezeichnung, Teilekennzeichnung, Seriennummer, Hersteller, Softwareversion, Erstbetriebnahme, (vom Hersteller) angegebenen Betriebsstunden / Laufleistung, Einbaudatum, durchgeführte Änderungsanträge, Ausfalldatum mit erreichter Betriebsleistung sowie Fehlerbeschreibung eingetragen.

Gespeichert werden kann auf einem RFID-Chip. Für Baugruppen 2 oder Komponenten 3, auf denen kein RFID angebracht werden kann, werden die o. g. Daten bei Einbau der Baugruppe 2 über den Rechner in die Fahrzeugakte eingegeben. Ist Identifizierung softwaremäßig in der Baugruppe 2 abgelegt kann diese aktualisiert und direkt in die Fahrzeugakte übernommen werden.

In der Fahrzeugakte werden weitere Daten hinterlegt, die sich auf das Gesamtfahrzeug beziehen, wie Fahrzeugkennzeichen (Y-Nummer), Dienststellen- Nr. (Einheit), Referenzkonfigurationsstand, Laufleistung, Betriebsstunden, Verbrauch, durchgeführte Untersuchungen etc.

Zur Diagnose liefern die Sensoren 4 des Fahrzeuges 1 laufend Informationen. Diese werden mit den Daten in der Fahrzeugakte im Rechner 5 abgeglichen. Liegt dem Rechner 5 die Information aus dem Zentralrechner 9 vor, dass beispielsweise der Anlasser (nicht näher dargestellt) nunmehr die vom Hersteller vorgegebene oder durch andere gleiche (äquivalente) Anlasser gleichen Fahrzeugtyps mit gleichen Einsatzbedingungen ermittelte Betriebs- bzw. Anlassstunden erreicht sind, (in der Regel die Stunden, nach denen diese Anlasser durch Ausfall gewechselt werden mussten,) wird dies beispielsweise auf einem Monitor 10 sichtbar gemacht, die Wartungs- bzw. Instandhaltungskette begonnen. In diesem Fall wird dann an diesem Fahrzeug 1 der Anlasser vorsorglich gewechselt.

Gleiches Szenario ergibt sich für einen Fahrzeugmotor, eine Stellmotor für die Waffe, Karosserieteile, Radabnutzungen (Mantel) etc., für alle Komponenten, die in die Diagnose einbezogen sind.

## Patentansprüche

1. Verfahren zur Steigerung der Effizienz von Fahrzeugen bzw. Fahrzeugsystemen mit und ohne Waffensysteme bei Betrieb, Instandhaltung und Wartung mit folgenden Schritten:
- Anlegen einer Fahrzeugakte,
a) enthaltend wenigstens eine Vers-Nr. und Bezeichnung, eine Teilekennzeichnung, eine Seriennummer, einen Hersteller, eine Softwareversion, eine Erstinbetriebnahme, vom Hersteller angegebenen Betriebsstunden / Laufleistung, ein Einbaudatum, durchgeführte Änderungsanträge, ein Ausfalldatum mit erreichter Betriebsleistung sowie eine Fehlerbeschreibung eines Bauteils oder einer Komponente anzustreben und
b) Daten, die sich auf das Gesamtfahrzeug beziehen, wie wenigstens ein Fahrzeugkennzeichen (Y-Nummer), eine Dienststellen-Nr. (Einheit), ein Referenzkonfigurationsstand, Laufleistung, Betriebsstunden, Verbrauch, durchgeführte Untersuchungen etc. ,
- Nutzung dieser Daten für eine ganzheitliche Betrachtung von fahrzeug- und waffensystemrelevanten logistischen Daten im Verbund mit den logistischen Prozessen, Organisations-, Informations- und Kommunikationsstrukturen des militärischen und polizeilichen Bedarfsträger /-deckers.

2. Verfahren nach Anspruch 1, **dadurch gekennzeichnet, dass** die Fahrzeugakte in einem Rechner (5) hinterlegt ist.

3. Verfahren nach Anspruch 1 oder 2, **dadurch gekennzeichnet, dass** der aktuellen Zustände an den Baugruppen (2) bzw. Komponenten (3) des Fahrzeuges (1) mittels Sensoren (4) gemessen wird, dieser Status- bzw. Zustandsdaten in den fahrzeuginternen Rechnereinheit (5) gelesen wird, wobei dieser mit wenigstens einer weiteren externen Rechnereinheit (7, 8, 9) kommunizieren kann, um so externer Diagnosedaten zu gleichen Baugruppen bzw. Komponenten durch die externe Rechnereinheit (7, 8, 9) erhalten zu können, sodass eine Diagnose der Status- bzw. Zustandsdaten anhand der fahrzeugeigenen und der externen Diagnosedaten derart, dass eine ereignisabhängige Wartung bzw. Instandhaltung erfolgt, wobei die Wartung / Instandhaltung vorgezogen wird, wenn eine weitere Einsatzbereitschaft nicht gefährdet werden darf, oder hinausgeschoben wird, wenn keine Nachteile beim Betriebsverhalten zu befürchten sind.

4. Verfahren nach Anspruch 3, **dadurch gekennzeichnet, dass** elektrische / elektronische und nichtelektrische / nicht elektronische Komponenten (3) bzw. Baugruppen (2) in die Diagnose eingebunden sind.

5. Verfahren nach einem der Ansprüche 1 bis 4, **dadurch gekennzeichnet, dass** waffensystemrelevante Daten gespeichert werden.
